# EUROPÄISCHE PATENTSCHRIFT

(11) **EP 3 219 518 B1**
(45) Veröffentlichungstag und Bekanntmachung des Hinweises auf die Patenterteilung: **24.10.2018**
(21) Anmeldenummer: 17155788.7
(22) Anmeldetag: 13.02.2017
(51) Int. Cl.: B60C 27/12, B60C 27/06

(54) **GLEITSCHUTZKETTE MIT SPANNEINRICHTUNG**
ANTI-SKID CHAIN WITH TENSIONING DEVICE
CHAÎNE ANTIDÉRAPANTE DOTÉE D'UN DISPOSITIF DE SERRAGE

(30) Priorität: 15.03.2016 DE 102016104747
(43) Veröffentlichungstag der Anmeldung: 20.09.2017
(73) Patentinhaber: Pewag Schneeketten GmbH, 8041 Graz (AT)
(72) Erfinder: SCHADER, Gerald, 9065 Klagenfurt/Ebenthal (AT); NIESS, Bernhard, 8311 Markt Hartmannsdorf (AT); BERGHOLD, Johann, 8063 Eggersdorf bei Graz (AT)
(74) Vertreter: Patentanwälte Geyer, Fehners & Partner mbB

(56) Entgegenhaltungen:
- EP-B1- 1 180 440
- WO-A1-2015/087478
- JP-A- H03 266 710

## Beschreibung

Die Erfindung bezieht sich auf eine Gleitschutzkette mit einer gegen die Innenflanke eines Reifens anlegbaren inneren Seitenhalterung in Form eines ringförmigen, elastisch aufspreizbaren Federbügels, einer gegen die Außenflanke des Reifens anlegbaren äußeren Seitenhalterung, mit einem an beiden Seitenhalterungen befestigten Laufnetz zur Anlage gegen die Lauffläche des Reifens und mit einer an der äußeren Seitenhalterung befestigten Spanneinrichtung, mittels der im montierten Zustand der Gleitschutzkette die beiden freien Enden des Federbügels mittels eines Zugseils gegeneinander verspannbar sind, wobei das Zugseil vom Federbügel über die Lauffläche des Reifens axial beweglich geführt und an die Spanneinrichtung angeschlossen ist.

Bei solchen Gleitschutzketten werden in der Regel Spannschlösser eingesetzt, um nach der Montage der Gleitschutzkette auf den Reifen beim Spannen des Kettennetzes einen unerwünschten Rücklauf des Spannorgans, das aus einem Kettenstrangabschnitt oder auch z. B. aus einem flexiblen Draht bestehen kann, entgegen der Spannrichtung zu vermeiden und so sicherzustellen, daß in Zugrichtung des Spannstrangs bewirkte Versetzungen desselben nicht wieder rückgängig gemacht werden können, der Spannstrang somit in seiner jeweils erreichten Spannposition gehalten wird.

Solche Spanneinrichtungen sind in großer Vielzahl bekannt, z. B. aus der EP 1 301 361 B1, EP 1 536 955 B1, EP 1 935 674 B1 oder der EP 2 441 600 B1.

In der EP 1 180 440 B1 (DE 600 18 732 T2) wird eine Schneekette beschrieben, bei welcher bei der Montage die innere Seitenhalterung in Form eines elastisch aufspreizbaren Federbügels ringförmig geschlossen werden kann, indem der Benutzer ein an einem Ende der noch nicht geschlossenen inneren Seitenhalterung befestigtes Formelement auf ein an dem anderen Ende der inneren Seitenhalterung befestigtes Aufnahmeelement aufschiebt und dadurch eine formschlüssige Verbindung erzeugt, welche die gewünschte ringförmig geschlossene Form der inneren Seitenhalterung sicherstellt. Das Aufnahmeelement ist mit einem über die Lauffläche des Reifens an die Vorderseite der Schneekette geführten Kabelzug versehen, der im Rahmen einer Bedienungseinrichtung zwischen zwei Kettenabschnitten verläuft, die zu seinen beiden Seiten längsseits und parallel zu ihm angeordnet und über quer verlaufende Kreuzstücke aneinander befestigt sind, um die Führung des Kabelzuges zu schützen und stabiler zu machen. Auf der Reifenaußenseite kann durch Ziehen an diesem Kabelzug der geschlossene Rastverschluß der inneren ringförmigen Seitenhalterung gelöst werden, wodurch ein erleichterter Abbau der Schneekette möglich ist.

Die hier eingesetzte Bedienungseinrichtung ist, abgesehen von dem Kabelzug, aus Ketten und Kreuzstücken aufgebaut. Mit dieser Bedienungseinrichtung läßt sich zwar die geschlossene ringförmige innere Seitenhalterung von der Außenseite des Reifens her zur Abnahme der Kette vom Reifen öffnen, ein Verschließen der inneren Seitenhalterung bei der Montage der Schneekette von der Außenseite des Reifens her ist bei dieser bekannten Konstruktion jedoch nicht möglich.

In der JP H03 266 710 A wird eine Gleitschutzkette beschrieben, bei der um den Umfang der Lauffläche des Reifens verteilt eine Vielzahl von zueinander parallelen leistenförmigen Elementen vorgesehen ist, wobei innerhalb des Inneren jedes derselben mindestens ein Zugteil axial beweglich geführt ist. An der Außenflanke des Reifens sind alle aus den leistenförmigen Elementen herausgeführten Zugseile radial zu einem zentral umlaufenden Spannstrang geführt und in diesen mit ihren Enden eingehängt, wodurch bei montierter Gleitschutzkette eine Spannung aller Zugseile erreicht wird, die auf der Reifeninnenflanke gemeinsam eine umlaufende innere Seitenhalterung ausbilden. Das Einhaken der Zugseilenden in den äußeren Spannstrang ist jedoch umständlich und erfordert einen deutlichen manuellen Kraftaufwand, was die Montage auf dem Reifen verlangsamt.

Bei der Gleitschutzkette aus der WO 2015/087478 A1 werden die äußere und die innere Seitenhalterung über eine Spanneinrichtung bei der Montage der Kette auf einem Reifen gleichzeitig gespannt. Dazu wird ein über die Lauffläche des Reifens geführtes Element eingesetzt, das an seinen beiden Enden an der inneren bzw. der äußeren Seitenhalterung befestigt ist und bei einer durch die Spanneinrichtung bewirkbaren Verschiebung in Umfangsrichtung des Reifens gleichzeitig beide Seitenhalterungen spannt.

Die EP 2 489 529 B1 beschreibt eine gattungsbildende Gleitschutzkette der eingangs genannten Art, bei der die innere Seitenhalterung aus einem bei montierter Kette ringförmig verschließbaren elastischen Federbügel besteht, an dem radinnenseitig das Laufnetz befestigt ist, während die äußere Seitenhalterung aus Kettenstrangabschnitten gebildet wird. Zum Absichern der Befestigung der Gleitschutzkette am Fahrzeugrad ist auf der Radaußenseite an der Gleitschutzkette eine Befestigungsanordnung mit einem Spannteil vorgesehen, das zum Festspannen der Gleitschutzkette am Rad sowie zur Freigabe derselben vom Rad in zwei Stellungen durch Fußbetätigung des Benutzers verstellt werden kann. Die Befestigungsanordnung ist an der Außenseite der Gleitschutzkette vorgesehen und erstreckt sich radial im wesentlichen über den Durchmesser der äußeren Seitenflanke des Fahrzeugreifens. Die Befestigungsanordnung umfaßt dabei eine steife Trägereinheit, auf der das Spannteil zwischen den beiden Einstellpositionen versetzt werden kann.

Allerdings ist diese bekannte Gleitschutzkette von einem relativ komplizierten Aufbau, im Hinblick auf die Spanneinrichtung mit der fußbetätigbaren Trägereinheit materialaufwendig und insgesamt auch umständlich betätigbar.

Hiervon ausgehend liegt der Erfindung die Aufgabe zugrunde, eine Gleitschutzkette für Fahrzeugräder vorzuschlagen, die eine rasche und einfache Montage gestattet und im montierten Zustand einen festen Sitz der Kette auf dem Fahrzeug sicherstellt. Außerdem soll der bauliche Aufwand bei der erfindungsgemäßen Gleitschutzeinrichtung relativ gering sein.

Zur Lösung dieser Aufgabe wird erfindungsgemäß vorgeschlagen, eine Gleitschutzkette der eingangs genannten Art so auszugestalten, daß das Zugseil zwischen beiden Seitenhalterungen in einem im Inneren eines leistenförmigen Führungsteiles mittig angebrachten axialen Führungskanal verläuft, wobei das Führungsteil aus elastischem Material besteht und in das Material des Führungsteiles beidseits des Führungskanales jeweils ein Seil eingegossen ist, und das Führungsteil wie auch die Seile an einem an der dort vorliegenden Seitenhalterung angebrachten Halteelement verbunden sind.

Als elastomeres Material für das Führungsteil können alle geeigneten elastischen Materialien eingesetzt werden, vorzugsweise spritzgußfähiger SBR (Styrol-Butadien-Kautschuk) oder spritzgußfähige, elastische TPUs (z. B. unter dem Handelsnamen "Desmopan" von Bayer MaterialScience oder unter dem Handelsnamen "Hytrel" der Firma DuPont erhältlich), vorzugsweise mit einer Shore-A-Härte von 60° bis 90°, insbesondere aber von 70°.

Bei der erfindungsgemäßen Gleitschutzkette kann zur Spannung und Freigabe des Zugseiles jede geeignete, entsprechend betätigbare Spanneinrichtung eingesetzt werden, etwa eine der Spanneinrichtungen, wie sie zu Beginn angesprochen wurden und wie sie auch materialsparend und mit einem nur geringen Platzbedarf ausführbar sind.

Daß erfindungsgemäß beidseits des Führungskanals in das Führungsteil je ein Seil eingegossen ist, das jeweils an einem an der dortigen Seitenhalterung angebrachten Halteelement verbunden ist, trägt bei montierter Gleitschutzkette im laufenden Betrieb derselben zu einer sehr guten Formbeständigkeit des Führungsteiles bei.

Die Führung des Zugseiles bei der erfindungsgemäßen Gleitschutzkette im Bereich der Laufläche, also zwischen beiden Seitenhalterungen, in einem axialen Führungskanal eines elastischen Führungsteiles bedeutet einen sehr geringen baulichen Aufwand, der sehr kostengünstig und frei von metallischen Kettenelementen ausführbar ist.

Sowohl das Zugseil zum Spannen, wie auch die Seile, die im Führungsteil eingesetzt werden, können aus jedem geeigneten Material bestehen, sind jedoch besonders bevorzugt jeweils als Stahlseil ausgebildet.

Die Ausbildung des Führungsteiles aus elastomerem Material kann in jeder geeigneten Weise erfolgen. Besonders bevorzugt wird das Führungsteil jedoch als ein elastomeres Spritzgußteil ausgebildet, das, erneut bevorzugt, mit einer strukturierten Oberflächengestaltung versehen ist, wobei für letztere, wieder bevorzugt, rillenartige Vertiefungen eingesetzt werden. Durch eine solchermaßen strukturierte Oberflächengestaltung läßt sich die Biegeeigenschaft des elastomeren Führungsteiles deutlich verbessern und ein besonders gutes Anliegen auf dem Reifen, auf dem die Gleitschutzkette montiert ist, erreichen.

Es ist weiterhin von Vorteil, wenn bei der erfindungsgemäßen Gleitschutzkette das elastomere Spritzgußteil zusammen mit den angeformten Halteelementen an seinen beiden Enden mittels Einlegespritzguß ausgebildet wird, was die Herstellung und Montage der erfindungsgemäßen Gleitschutzkette begünstigt.

In weiterer vorzugsweiser Ausgestaltung der Erfindung werden dem Material des elastomeren Spritzgußteiles noch organische Füllstoffe, insbesondere Glasfasern, Kohlenstofffasern und/oder die Abriebbeständigkeit erhöhende Materialteilchen, beigemengt, um die Eigenschaften des elastomeren Spritzgußteiles bei Benutzung der Gleitschutzkette zu verbessern.

Vorteilhafterweise wird bei der Erfindung das Zugseil an der inneren Seitenhalterung zwischen einem der beiden Enden des Federbügels, an dem es nicht befestigt ist, und dem Halteelement des Führungsteiles durch ein am Federbügel befestigtes, entlang desselben verlaufendes Kunststoffrohr geführt.

Es ist weiterhin von Vorteil, wenn bei der erfindungsgemäßen Gleitschutzkette die Spanneinrichtung im montierten Zustand der Gleitschutzkette mittig zum Reifen angebracht ist, um ein günstiges Unwuchtverhalten der Kette beim Lauf zu erreichen.

Vorzugsweise wird bei der erfindungsgemäßen Gleitschutzkette eine Spanneinrichtung eingesetzt, die manuell bedienbar ist, wodurch in der Regel eine besonders rasche Montage der Kette erzielt werden kann.

Die mittige Anordnung der Spanneinrichtung an der Gleitschutzkette läßt sich vorzugsweise dadurch erreichen, daß im wesentlichen radial gerichtete, gleich lange Haltestege die Spanneinrichtung mit der äußeren Seitenhalterung verbinden.

Die Erfindung wird nachfolgend im Prinzip beispielshalber noch näher erläutert. Es zeigen:
- Fig. 1: eine perspektivische Schrägansicht eines mit einer erfindungsgemäßen Gleitschutzkette versehenen Reifens von der Reifenaußenseite her;
- Fig. 2: eine Seitenansicht von Fig. 1;
- Fig. 3: eine Draufsicht (von oben) auf die Darstellung der Fig. 2;
- Fig. 4: eine Draufsicht auf ein Führungsteil (vergrößert);
- Fig. 5: einen vergrößerten Detailausschnitt aus dem Führungsteil gemäß Fig. 4, und
- Fig. 6: eine Ansicht der Gleitschutzkette aus den Fig. 1 und 2, aber auf die Reifeninnenseite.

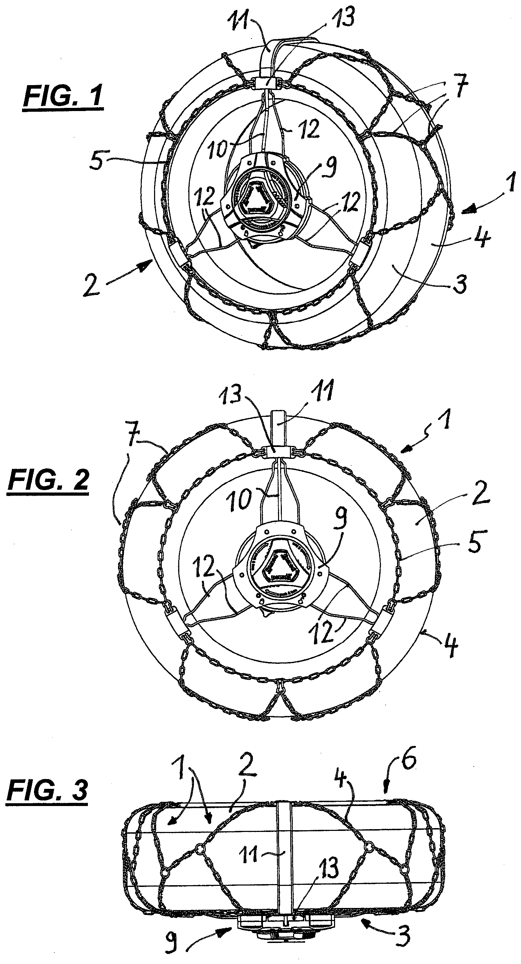

In den Figuren ist ein Ausführungsbeispiel einer erfindungsgemäßen Gleitschutzkette 1 dargestellt, wobei Fig. 1 eine perspektivische Schrägansicht auf die Vorderseite einer auf einem Fahrzeugreifen 2 montierten Gleitschutzkette 1, Fig. 2 eine Seitenansicht und Fig. 3 eine Draufsicht (von oben) auf die Kette der Figuren 1 und 2 zeigt.

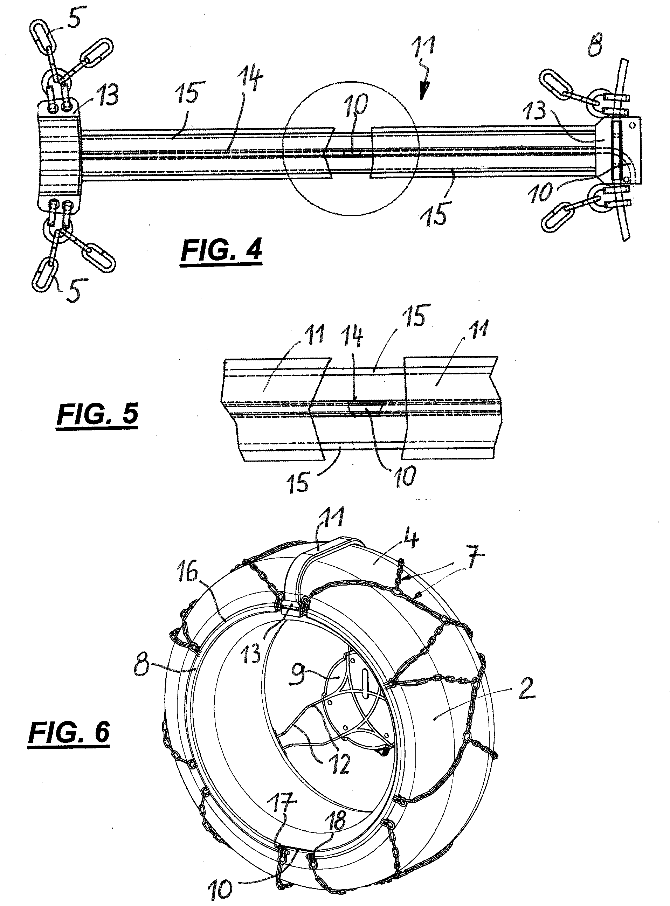

Wie aus den Figuren 1 und 2 ersichtlich ist, weist die auf einen Reifen 2 montierte Gleitschutzkette 1 auf der Reifenaußenseite 3 eine aus einem Kettenstrang bestehende äußere Seitenhalterung 5 und auf der Innenseite 6 des Reifens 2 eine innere Seitenhalterung in Form eines ringförmig verlaufenden, elastisch zum Montieren aufspreizbaren Federbügels 8 auf, wie dies aus Fig. 6 ersichtlich ist, welche eine Ansicht auf die Rückseite des Reifens 2 bei montierter Gleitschutzkette 1 zeigt.

Auf der Lauffläche 4 des Reifens 2 ist ein Laufnetz 7 der Gleitschutzkette 1 angebracht, dessen seitliche Enden zum einen an der äußeren Seitenhalterung 5 (Fig. 1 und 2) und zum anderen an dem Federbügel 8 der inneren Seitenhalterung 8 (Fig. 4 und 6) befestigt sind.

Mittig zu der jeweiligen Gesamtanordnung der auf dem Reifen 2 montierten Gleitschutzkette 1 ist eine Spanneinrichtung 9 vorgesehen, die über drei im wesentlichen radial ausgerichtete Paare von Haltestegen 12 an der äußeren Seitenhalterung 5 befestigt ist und von diesen in ihrer zentralen Lage gehalten wird.

An die Spanneinrichtung 9 ist ein Zugseil 10 angeschlossen, auf das nachfolgend noch näher eingegangen wird. Dieses Zugseil 10 läuft radial von der Spanneinrichtung 9 zu einem leistenförmigen Führungsteil 11 aus einem elastischen Material hin, bevorzugt aus einem elastomeren Material, etwa einem spritzgußfähigen SBR (Styrol-Butadien-Kautschuk) oder auch aus einem spritzgußfähigen und elastischen TPU (thermoplastisches Polyurethan, etwa unter der Handelsmarke "Desmopan" von Bayer MaterialScience, oder unter dem Handelsnamen "Hytrel" von DuPont im Markt erhältlich). Bevorzugt ist das Führungsteil 11 als Spritzgußteil ausgeführt.

Zur Verbesserung der Benutzungseigenschaften des Führungsteiles 11 werden mit Vorteil anorganische Füllstoffe beigefügt, z. B. Glasfasern oder Kunststoff-Fasern und/oder auch die Abriebfestigkeit erhöhende Teilchen.

Das leistenförmige Führungsteil 11 ist an seinem einen Ende an der äußeren Seitenhalterung 5 und an seinem anderen Ende an der inneren Seitenhalterung in Form des Federbügels 8 jeweils über ein Halteteil 13 befestigt (vgl. Darstellungen der Fig. 1, 2 sowie 6).

Das Führungsteil 11 ist ferner in seinem Inneren mit einem mittig verlaufenden, axialen Führungskanal 14 versehen, der so bemessen ist, daß in ihm das Zugseil 10 in axialer Richtung leicht bewegt werden kann. Der Führungskanal 14 wird bevorzugt durch einen in das Material des Führungsteiles 11 eingegossenen Bowdenzug realisiert.

In Fig. 4 ist, etwas vergrößert, eine Draufsicht auf ein leistenförmiges Führungsteil 11 gezeigt, und Fig. 5 stellt den in Fig. 4 mit einem Kreis gekennzeichneten Bereich aus dem Führungsteil 11, aber vergrößert, dar.

Dabei ist sowohl in Fig. 4, wie auch in der Detaildarstellung der Fig. 5, der mittlere Abschnitt in diesem Bereich so wiedergegeben, daß nur die dort in das Material des Führungsteiles 11 eingelagerten Elemente gezeigt sind, während das sie umgebende elastische Material des Führungsteiles 11 zur besseren Darstellung weggelassen ist.

Wie insbesondere aus Fig. 5 ersichtlich, ist der Führungskanal 14 mit einem geringfügig größeren Durchmesser als der des Zugseiles 10 ausgebildet, damit eine leichte und unbehinderte Beweglichkeit des Zugseiles 10 im Führungskanal 14 gegeben ist.

Beidseits des Zugseils 10, in gleichen Abständen zu diesem, sind in das Material des Führungsteiles 11 auch noch, axial und parallel zu diesem, zur Aufnahme von Kräften in Axialrichtung des Führungsteiles 11 zwei Seile 15 eingegossen, die an ihren beiden seitlichen Enden jeweils an dem dort befindlichen Halteteil 13 befestigt sind.

Die Darstellung der Fig. 4 zeigt ferner, nur ganz prinzipiell, an der inneren Seitenhalterung 8 der Gleitschutzkette 1 eine Umleitung des Zugseiles 10 zum Einlauf in ein flexibles Kunststoffrohr 16 (vgl. Fig. 6), das von dieser Einlaufstelle am Halteteil 13 weg entlang dem Verlauf des Federbügels 8, an diesem befestigt, bis zu dem folgenden freien Ende 17 desselben verläuft, an dem zwar das flexible Kunststoffrohr 16 mit seinem Ende befestigt ist, während das aus dem Ende des Kunststoffrohres 16 dort austretende Zugseil 10 über das freie Ende 17 des Federbügels 8 hinausragt und unter Überbrückung des Abstands zu dem anderen freien Ende 18 des Federbügels 8 an letzterem befestigt ist.

Wird nach Auflegen der Gleitschutzkette 1 auf das Rad 2 das Verspannen der inneren Seitenhalterung bzw. des Federbügels 8 gewünscht, kann durch Spannen des Zugseiles 10 mittels der Spanneinrichtung 9 ein Annähern der beiden freien Enden 17, 18 des Federbügels 8 an der Innenseite 6 des Reifens 2 bewirkt und damit ein Zusammenziehen der freien Enden 17, 18 des Federbügels 8 erzeugt werden, bis diese (maximal) aneinander anliegen. Dieser Zustand kann in geeigneter Weise durch die äußere Spanneinrichtung 9 blockiert werden, so daß die dabei eingetretene Verspannung der inneren Reifenhalterung und dabei auch des Laufnetzes 7 am Reifen 2 während der Benutzung der Gleitschutzkette 1 sichergestellt ist.

Das Kunststoffrohr 16, in dem das Zugseil 10 auf der Innenseite 6 des Reifens 2 bis zu dem Abstand zwischen beiden Enden 17, 18 des Federbügels 8 verläuft, kann als eigenständiges Element neben der Kunststoffumhüllung des Federbügels 8 angeordnet und an dieser befestigt sein. Besonders günstig ist es jedoch, beides einstückig miteinander auszubilden, so daß das Kunststoffrohr 16 direkt an die Kunststoffhülle des Federbügels 8 angeformt ist.

Das Führungsteil 11 ist auf seiner vom Reifen 2 abweisenden Oberfläche bevorzugt mit einer strukturierten Oberfläche versehen, vorteilhafterweise mit geeignet angebrachten rillenartigen Vertiefungen (in den Figuren nicht dargestellt), wodurch ein besseres Verbiegen des Führungsteiles 11 und damit ein besonders gutes Anliegen desselben am Reifen 2 erreicht werden kann.

## Patentansprüche

1. Gleitschutzkette (1) mit einer gegen die Innenflanke (6) eines Reifens (2) anlegbaren inneren Seitenhalterung in Form eines ringförmigen, elastisch aufspreizbaren Federbügels (8), einer gegen die Außenflanke des Reifens (2) anlegbaren äußeren Seitenhalterung (5), mit einem an beiden Seitenhalterungen (5, 8) befestigten Laufnetz (7) zur Anlage gegen die Lauffläche (4) des Reifens (2) und mit einer an der äußeren Seitenhalterung (5) befestigten Spanneinrichtung (9), mittels der im montierten Zustand der Gleitschutzkette (2) die beiden freien Enden (17, 18) des Federbügels (8) mittels eines Zugseiles (10) gegeneinander verspannbar sind, wobei das Zugseil (10) vom Federbügel (8) über die Lauffläche (4) des Reifens (2) axial beweglich geführt und an die Spanneinrichtung (9) angeschlossen ist, ***dadurch gekennzeichnet*, daß** das Zugseil (10) zwischen beiden Seitenhalterungen (5, 8) in einem im Inneren eines leistenförmigen Führungsteiles (11) mittig angebrachten Führungskanal (14) verläuft, wobei das Führungsteil (11) aus elastischem Material besteht und in das Material des Führungsteiles (11) beidseits des Führungskanals (14) jeweils ein Seil (15) eingegossen ist und das Führungsteil (11) wie auch die Seile (15) jeweils an einem an der dortigen Seitenhalterung (5.8) angebrachten Halteelement (13) verbunden sind.

2. Gleitschutzkette nach Anspruch 1, **dadurch gekennzeichnet, daß** das Zugseil (10) an der inneren Seitenhalterung (8) zwischen einem (17) der beiden Enden des Federbügels (8), an dem es nicht befestigt ist, und dem Halteelement (13) des Führungsteils (11) durch ein am Federbügel (8) befestigtes, entlang desselben verlaufendes Kunststoffrohr (16) geführt ist.

3. Gleitschutzkette nach Anspruch 1 oder 2, **dadurch gekennzeichnet, daß** das Zugseil (10) und die Seile (15) im Führungsteil (11) jeweils als Stahlseile vorgesehen sind.

4. Gleitschutzkette nach einem der Ansprüche 1 bis 3, **dadurch gekennzeichnet, daß** das Führungsteil (11) als elastomeres Spritzgußteil ausgebildet ist.

5. Gleitschutzkette nach Anspruch 4, **dadurch gekennzeichnet, daß** das elastomere Spritzgußteil mit einer strukturierten Oberflächengestaltung versehen ist.

6. Gleitschutzkette nach Anspruch 5, **dadurch gekennzeichnet, daß** das elastomere Spritzgußteil an seiner vom Reifen (2) abgewandten Seite rillenartige Vertiefungen aufweist.

7. Gleitschutzkette nach einem der Ansprüche 4 bis 6, **dadurch gekennzeichnet, daß** das elastomere Spritzgußteil mit angeformten Halteelementen (13) mittels Einlegespritzguß ausgebildet ist.

8. Gleitschutzkette nach einem der Ansprüche 4 bis 7, **dadurch gekennzeichnet, daß** dem Material des elastomeren Spritzgußteiles anorganische Füllstoffe, insbesondere Glasfasern, Kohlenstofffasern und/oder die Abriebbeständigkeit erhöhende Materialteilchen, beigemengt sind.

9. Gleitschutzkette nach einem der Ansprüche 1 bis 8, **dadurch gekennzeichnet, daß** die Spanneinrichtung (9) im montierten Zustand der Gleitschutzkette (1) mittig zum Reifen (2) angebracht ist.

10. Gleitschutzkette nach einem der Ansprüche 1 bis 9, **dadurch gekennzeichnet, daß** die Spanneinrichtung (9) manuell bedienbar ist.

11. Gleitschutzkette nach einem der Ansprüche 9 oder 10, **dadurch gekennzeichnet, daß** die Spanneinrichtung (9) durch im wesentlichen radial gerichtete Haltestege (12) mit der äußeren Seitenhalterung (5) verbunden ist.

12. Gleitschutzkette nach einem der Ansprüche 1 bis 11, **dadurch gekennzeichnet, daß** das Führungsteil (11) aus einem elastomeren Material besteht.

13. Gleitschutzkette nach einem der Ansprüche 1 bis 11, **dadurch gekennzeichnet, daß** das Material des Führungsteiles (11) ein spritzgußfähiges elastisches TPU ist.

14. Gleitschutzkette nach einem der Ansprüche 1 bis 13, **dadurch gekennzeichnet, daß** das Material des Führungsteiles (11) eine Shore-A-Härte im Bereich von 60° bis 90°, bevorzugt von 70°, aufweist.

## Claims

1. Anti-skid chain (1) having an inner lateral mounting that is capable of being placed against the inner shoulder (6) of a tyre (2) and is in the form of an annular, elastically expandable spring bracket (8), an outer lateral mounting (5) that is capable of being placed against the outer shoulder of the tyre (2), having a chain mesh tread pattern (7) for bearing on the tread face (4) of the tyre (2), said chain mesh tread pattern (7) being fastened to both lateral mountings (5, 8), and having a tensioning installation (9) by means of which in the fitted state of the anti-skid chain (2) the two free ends (17, 18) of the spring bracket (8) can be tensioned in relation to one another by means of a traction cable (10), said tensioning installation (9) being fastened to the outer lateral mounting (5), wherein the traction cable (10) by the spring bracket (8) is guided so as to be axially movable across the tread face (4) of the tyre (2) and is connected to the tensioning installation (9),
**characterized in that**
the traction cable (10) between both lateral mountings (5, 8) runs in a guide duct (14) that is attached so as to be centric in the interior of a strip-shaped guide part (11), wherein the guide part (11) is composed of an elastic material, and in each case one cable (15) is moulded in the material of the guide part (11) on both sides of the guide duct (14), and the guide part (11) as well as the cables (15) are in each case connected at a holding element (13) that is attached to the lateral mounting (5.8) there.

2. Anti-skid chain according to Claim 1, **characterized in that** the traction cable (10) on the inner lateral mounting (8), between one (17) of the two ends of the spring bracket (8), said one end (17) being the end to which said traction cable (10) is not fastened, and the holding element (13) of the guide part (11), is guided by way of a plastic tube (16) that fastened to the spring bracket (8) and runs along the latter.

3. Anti-skid chain according to Claim 1 or 2, **characterized in that** the traction cable (10) and the cables (15) in the guide part (11) are in each case provided as steel cables.

4. Anti-skid chain according to one of Claims 1 to 3, **characterized in that** the guide part (11) is configured as an elastomeric injection-moulded part.

5. Anti-skid chain according to Claim 4, **characterized in that** the elastomeric injection-moulded part is provided with a structured surface design.

6. Anti-skid chain according to Claim 5, **characterized in that** the elastomeric injection-moulded part on the side thereof that faces away from the tyre (2) has groove-type depressions.

7. Anti-skid chain according to one of Claims 4 to 6, **characterized in that** the elastomeric injection-moulded part by means of insert moulding is provided with moulded holding elements (13).

8. Anti-skid chain according to one of Claims 4 to 7, **characterized in that** inorganic fillers, in particular glass fibres, carbon fibres, and/or material particles that enhance the resistance to abrasion, are added to the material of the elastomeric injection-moulded part.

9. Anti-skid chain according to one of Claims 1 to 8, **characterized in that** the tensioning installation (9) in the fitted state of the anti-skid chain (1) is attached so as to be centric to the tyre (2).

10. Anti-skid chain according to one of Claims 1 to 9, **characterized in that** the tensioning installation (9) is capable of being manually operated.

11. Anti-skid chain according to one of Claims 9 or 10, **characterized in that** the tensioning installation (9) is connected to the outer lateral mounting (5) by way of holding webs (12) that are aligned so as to be substantially radial.

12. Anti-skid chain according to one of Claims 1 to 11, **characterized in that** the guide part (11) is composed of an elastomeric material.

13. Anti-skid chain according to one of Claims 1 to 11, **characterized in that** the material of the guide part (11) is an injection-moulding-capable elastic TPU.

14. Anti-skid chain according to one of Claims 1 to 13, **characterized in that** the material of the guide part (11) has a Shore A hardness in the range from 60° to 90°, preferably of 70°.

## Revendications

1. Chaîne antidérapante (1) avec un support latéral intérieur applicable contre le flanc intérieur (6) d'un pneu (2), sous la forme d'un étrier à ressort annulaire, élastiquement expansible (8), un support latéral extérieur (5) applicable contre le flanc extérieur du pneu (2), avec un filet de roulement (7) fixé aux deux supports latéraux (5, 8) à appliquer contre la bande de roulement (4) du pneu (2) et avec un dispositif de serrage (9) fixé au support latéral extérieur (5), au moyen duquel, dans l'état monté de la chaîne antidérapante (2), les deux extrémités libres (17, 18) de l'étrier à ressort (8) peuvent être serrées l'une contre l'autre au moyen d'un câble de traction (10), dans laquelle le câble de traction (10) est guidé de façon mobile axialement sur la bande de roulement (4) du pneu (2) par l'étrier à ressort (8) et est raccordé au dispositif de serrage (9), **caractérisée en ce que** le câble de traction (10) s'étend entre les deux supports latéraux (5, 8) dans un canal de guidage (14) pratiqué au milieu à l'intérieur d'une pièce de guidage en forme de baguette (11), dans laquelle la pièce de guidage (11) est constituée d'un matériau élastique et un câble (15) est chaque fois moulé dans le matériau de la pièce de guidage (11) de part et d'autre du canal de guidage (14) et la pièce de guidage (11) ainsi que les câbles (15) sont respectivement attachés à un élément de maintien (13) monté sur le support latéral local (5, 8).

2. Chaîne antidérapante selon la revendication 1, **caractérisée en ce que** le câble de traction (10) est guidé sur le support latéral intérieur (8) entre une (17) des deux extrémités de l'étrier à ressort (8), à laquelle il n'est pas fixé, et l'élément de maintien (13) de la pièce de guidage (11), par un tube en matière plastique (16) fixé à l'étrier à ressort (8) et s'étendant le long de celui-ci.

3. Chaîne antidérapante selon la revendication 1 ou 2, **caractérisée en ce que** le câble de traction (10) et les câbles (15) sont prévus dans la pièce de guidage (11) respectivement sous forme de câbles en acier.

4. Chaîne antidérapante selon l'une quelconque des revendications 1 à 3, **caractérisée en ce que** la pièce de guidage (11) est une pièce moulée par injection en élastomère.

5. Chaîne antidérapante selon la revendication 4, **caractérisée en ce que** la pièce moulée par injection en élastomère est munie d'une forme de surface structurée.

6. Chaîne antidérapante selon la revendication 5, **caractérisée en ce que** la pièce moulée par injection en élastomère présente des creux en forme de rainures sur son côté détourné du pneu (2).

7. Chaîne antidérapante selon l'une quelconque des revendications 4 à 6, **caractérisée en ce que** la pièce moulée en élastomère est formée avec des éléments de maintien façonnés (13) par moulage par injection à insertion.

8. Chaîne antidérapante selon l'une quelconque des revendications 4 à 7, **caractérisée en ce que** des matières de charge inorganiques, en particulier des fibres de verre, des fibres de carbone et/ou des particules de matière augmentant la résistance à l'abrasion sont ajoutées au matériau de la pièce moulée par injection en élastomère.

9. Chaîne antidérapante selon l'une quelconque des revendications 1 à 8, **caractérisée en ce que** le dispositif de serrage (9) dans l'état monté de la chaîne antidérapante (1) est placé au milieu du pneu (2).

10. Chaîne antidérapante selon l'une quelconque des revendications 1 à 9, **caractérisée en ce que** le dispositif de serrage (9) peut être manoeuvré à la main.

11. Chaîne antidérapante selon une des revendications 9 ou 10, **caractérisée en ce que** le dispositif de serrage (9) est relié au support latéral extérieur (5) par des branches de retenue (12) orientées essentiellement radialement.

12. Chaîne antidérapante selon l'une quelconque des revendications 1 à 11, **caractérisée en ce que** la pièce de guidage (11) se compose d'un matériau élastomère.

13. Chaîne antidérapante selon l'une quelconque des revendications 1 à 11, **caractérisée en ce que** le matériau de la pièce de guidage (11) est du TPU élastique pouvant être moulé par injection.

14. Chaîne antidérapante selon l'une quelconque des revendications 1 à 13, **caractérisée en ce que** le matériau de la pièce de guidage (11) présente une dureté Shore A dans la plage de 60° à 90°, de préférence de 70°.
